# FASCICULE DE BREVET EUROPEEN

(11) **EP 2 897 913 B1**
(45) Date de publication et mention de la délivrance du brevet: **19.06.2019**
(21) Numéro de dépôt: 13762132.2
(22) Date de dépôt: 13.09.2013
(51) Int. Cl.: C02F 103/08, C02F 101/10, B01D 21/00, C02F 1/00, C02F 1/24, C02F 1/52, C02F 9/00

(54) **PROCÉDÉ DE TRAITEMENT D'EAU COMPRENANT UNE FLOTTATION COMBINÉE À UNE FILTRATION GRAVITAIRE ET INSTALLATION CORRESPONDANTE**
WASSERBEHANDLUNGSVERFAHREN MIT EINER KOMBINATION AUS FLOTATION UND SCHWERKRAFTFILTRATION SOWIE ENTSPRECHENDE AUSRÜSTUNG
WATER TREATMENT PROCESS COMPRISING FLOATATION COMBINED WITH GRAVITY FILTRATION, AND CORRESPONDING EQUIPMENT

(30) Priorité: 19.09.2012 FR 1258789
(43) Date de publication de la demande: 29.07.2015
(73) Titulaire: Veolia Water Solutions & Technologies Support, 94417 Saint-Maurice Cedex (FR)
(72) Inventeur: GAID, Abdelkader, F-75014 Paris (FR); LEPARC, Jérôme, F-78300 Poissy (FR)
(74) Mandataire: Vidon Brevets & Stratégie
(86) Numéro de dépôt international: PCT/EP2013/069061
(87) Numéro de publication internationale: WO 2014/044619

(56) Documents cités:
- FR-A1- 2 958 929
- GB-A- 2 263 694
- US-A- 3 836 460

## Description

### 1. Domaine de l'invention

Le domaine de l'invention est celui du traitement d'eaux en vue de leur potabilisation ou de leur dessalement.

Plus précisément, l'invention concerne une technique de traitement d'eau mettant en oeuvre de manière combinée une flottation et une filtration gravitaire.

### 2. Art antérieur

Différents procédés peuvent être mis en oeuvre de façon à produire de l'eau potable. Au rang de ces procédés, encore appelés procédés de potabilisation, figurent les procédés de type DAFF (pour Dissolved Air Flottation Filtration en langue anglaise, c'est-à-dire Flottation à Air Dissous-Filtration) combinant une flottation et une filtration granulaire.

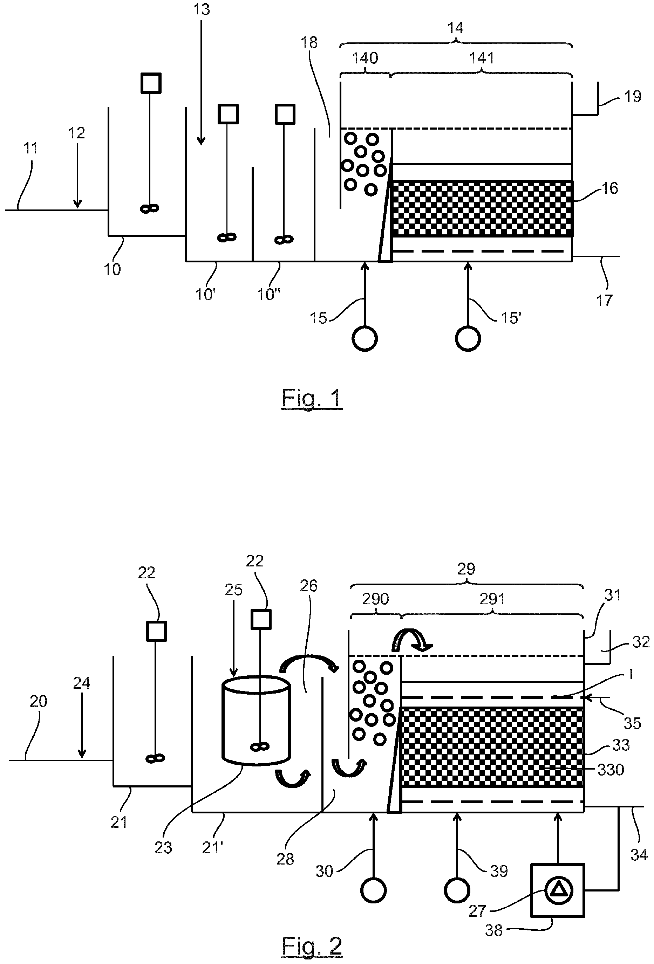

En référence à la figure 1, un procédé de ce type comprend des cycles de traitement successifs qui consistent généralement à introduire l'eau à traiter dans une cuve de coagulation 10 éventuellement suivie d'une ou plusieurs cuves de floculation 10', 10" au moyen d'une canalisation d'amenée 11. La coagulation et la floculation peuvent s'effectuer dans la même cuve 10. Un ou plusieurs réactifs coagulant 12 avec ou sans floculant 13 y sont injectés et mélangés dans l'eau à traiter. L'utilisation de réactif coagulant est donc obligatoire alors que celle de floculant est optionnelle. Ainsi, les particules colloïdales et en suspension dans l'eau à traiter, notamment les algues, le phytoplancton, s'agglomèrent et forment des flocs. Une partie de la matière organique dissoute dans l'eau peut également être adsorbée.

L'eau préalablement coagulée et le cas échéant en outre floculée est ensuite acheminée via une surverse 18 à la base de la zone d'injection 140 d'un réacteur de flottation 14 au niveau de laquelle de l'eau blanche 15, c'est-à-dire une eau sursaturée en oxygène, est également introduite. Sous l'effet de la détente de l'oxygène à l'intérieur du réacteur de flottation 14, des bulles de gaz se forment en remontant à la surface du réacteur de flottation 14 entraînant avec elles les flocs présents dans l'eau. Le mélange de bulles d'air et de flocs est alors évacué en surverse de la zone de séparation 141 du réacteur de flottation 14 via une goulotte 19 dans laquelle il est poussé au moyen d'un dispositif de raclage prévu à cet effet.

L'eau ayant subi la flottation s'écoule par gravité depuis la base du réacteur de flottation 14, et plus particulièrement celle de sa zone de séparation 141, dans un filtre gravitaire 16 qui s'étend dans le prolongement de la zone de séparation 141 du réacteur de flottation 14 en dessous de celle-ci. Ce filtre gravitaire 16 loge un média filtrant granulaire réparti sur une hauteur de média maximale d'environ 1,20 m. Ce média peut être monocouche et constitué par exemple d'une couche de sable ou multicouche, notamment bicouche, et constitué par exemple d'une couche de sable et d'au moins une couche d'un autre matériau tel que l'anthracite, la pierre ponce, le charbon actif en grain... L'eau provenant du réacteur de flottation 14 est filtrée dans ce filtre gravitaire 16 et ainsi débarrassée des flocs et des particules résiduels qui s'y trouvaient en suspension. De l'eau traitée 17 est recueillie à la sortie du filtre gravitaire 16.

Au fur et à mesure que l'eau est filtrée au sein du filtre gravitaire 16, celui-ci se colmate. Afin de permettre au filtre gravitaire 16 de conserver un niveau de performance convenable, des cycles de lavage sont régulièrement mis en oeuvre entre deux cycles de traitement. Ces cycles de lavage consistent généralement à injecter de l'eau à contre-courant à travers le filtre gravitaire 16 via des moyens d'injection 15' pour dégager la matière accumulée entre les interstices formés entre les grains de média filtrant. Cette matière remonte avec l'eau de lavage jusqu'à la surverse du réacteur de flottation 19 depuis laquelle elle est évacuée.

Les procédés de ce type peuvent également être mis en oeuvre en tant que prétraitement dans un traitement de dessalement, l'eau provenant du filtre gravitaire 16 servant alors d'eau d'alimentation d'une unité de dessalement par exemple par osmose inverse.

Les procédés de ce type sont particulièrement efficaces du fait qu'ils permettent de produire des eaux potables ou des eaux d'alimentation de membranes d'osmose inverse de belle qualité. Ils peuvent néanmoins être encore améliorés.

Les documents FR2958929A et GB2263694A décrivent aussi des procédés de traitement d'eau similaires.

### 3. Inconvénients de l'art antérieur

Notamment, les hauteurs de média granulaire des systèmes de l'art antérieur combinant flottation et filtration gravitaire se situent autour de 1,20 m. De telles hauteurs ne permettent pas de mettre en oeuvre des vitesses de filtration supérieures à 10 m/h. Or, il est souhaitable de pouvoir utiliser des vitesses plus élevées.

Par ailleurs, afin d'assurer une séparation liquide-solide convenable entre les flocs et l'eau, la hauteur d'eau dans le réacteur de flottation 14 doit être suffisamment élevée. Elle se situe généralement entre 3,5 et 5,5 mètres.

Compte tenu de cette hauteur d'eau importante, il est observé que dans les procédés existants, le temps de remontée des eaux de lavage injectées à contre courant dans le filtre gravitaire est élevé. A titre d'exemple, lorsque la hauteur d'eau dans le réacteur de flottation est comprise entre 4 et 5,5 mètres, et que la vitesse de l'eau de lavage dans le filtre gravitaire est comprise entre 20 et 50 m³/m²/h, le temps de remontée de l'eau de lavage jusqu'à la surverse du réacteur de flottation est compris respectivement entre 12 à 16,6 minutes et 4,8 à 6,6 minutes. Par comparaison, la durée de remontée de l'eau de lavage dans un filtre à sable conventionnel disposant d'une hauteur comprise entre 1 et 1,2 mètres serait de l'ordre de 3 minutes lors du lavage du filtre à 20 m³/m²/h.

Une durée élevée de remontée des eaux de lavage dans le réacteur de flottation laisse suffisamment de temps aux particules et flocs délogés du filtre gravitaire pour se rencontrer dans le réacteur de flottation et s'agréger les unes aux autres pour former des particules ou flocs de tailles plus importantes. Ce phénomène, appelé refloculation, engendre ainsi la formation de particules et de flocs plus lourds qui sont difficilement évacués du réacteur de flottation lors de la remontée de l'eau de lavage jusqu'à sa surverse. Ces particules et flocs ont alors tendance à décanter à la surface du filtre gravitaire, c'est-à-dire à l'interface entre le filtre gravitaire et le réacteur de flottation. Il se forme ainsi à la surface du filtre gravitaire une fine couche de particules et de flocs dont la présence tend à augmenter la perte de charge initiale à travers le filtre gravitaire à l'issue d'un cycle de lavage. Ce phénomène de refloculation est donc de nature à réduire les performances du filtre gravitaire.

Selon un autre aspect, lorsque l'eau, qui a subi une étape de flottation, et est sursaturée en oxygène, va traverser la couche filtrante du filtre gravitaire, il se crée un dégazage de cette eau entraînant alors la formation de bulles d'air au sein du matériau filtrant et qui sont le plus souvent piégées dans les interstices entre les grains de média filtrant. La présence de ces bulles de gaz au sein du média filtrant, qui résulte de ce phénomène appelé embolie gazeuse du filtre, tend à augmenter progressivement la perte de charge à travers celui-ci. Il est alors nécessaire de mettre en oeuvre de fréquents cycles de lavage du filtre pour permettre à celui-ci de conserver un niveau de performance convenable. L'embolie gazeuse du filtre induit par conséquent une réduction de la durée des cycles de traitement, une augmentation des pertes en eau dues au lavage du filtre, et une réduction de la production d'eau traitée.

Par ailleurs, les techniques de l'art antérieur supposent la mise en oeuvre d'installation de coagulation et le cas échéant de floculation de taille relativement importante du fait que les temps de traitement pour obtenir une coagulation et le cas échéant une floculation efficaces sont relativement longs, dépendant de la qualité de l'eau à traiter et de la température.

### 4. Objectifs de l'invention

L'invention a notamment pour objectif de pallier ces inconvénients de l'art antérieur.

Plus précisément, un objectif de l'invention est de fournir une technique de traitement d'eau combinant une flottation et une filtration gravitaire dont les performances puissent, dans au moins un mode de réalisation, être augmentées par rapport aux techniques de traitement de ce type selon l'art antérieur.

Notamment, un objectif de l'invention est de mettre en oeuvre, dans au moins un mode de réalisation, une telle technique qui permette de mettre en oeuvre des vitesses de filtration supérieure à 10 m/h.

Un autre objectif de l'invention est, dans au moins un mode de réalisation, de limiter, voire de supprimer le phénomène de refloculation dans le réacteur de flottation lors des opérations de lavage du filtre gravitaire.

L'invention a encore pour objectif de mettre en oeuvre une telle technique qui concourt, dans au moins un mode de réalisation, à limiter voire à supprimer le phénomène d'embolie gazeuse du filtre gravitaire.

L'invention vise également à fournir une telle technique dont la mise en oeuvre permette, dans au moins un mode de réalisation, d'optimiser l'étape de coagulation et éventuellement de floculation notamment en réduisant le temps de contact de l'eau avec le ou les coagulants et éventuellement floculants, et en réduisant la taille des installations de coagulation et éventuellement de floculation.

Un autre objectif de l'invention est de fournir une telle technique qui soit, dans au moins un mode de réalisation, simple et/ou fiable et/ou économique.

### 5. Exposé de l'invention

Ces objectifs, ainsi que d'autres qui apparaîtront par la suite, sont atteints à l'aide d'un procédé de traitement d'eau tel que défini dans la revendication 1.

Selon l'invention, ladite étape de filtration gravitaire est mise en oeuvre à une vitesse comprise entre 10 m/h et 30 m/h, ledit filtre gravitaire présentant un lit de média filtrant réparti sur une hauteur comprise entre 1,5 m et 3,0 m.

Ainsi, selon l'invention, grâce à l'utilisation de hauteurs de média filtrant plus grandes, la vitesse de filtration et corollairement les débits d'eau traités peuvent être considérablement augmentés.

Il est précisé que le réacteur de flottation est au moins en partie superposé sur le filtre gravitaire. De manière préférentielle, il ne sera pas totalement superposé sur le filtre gravitaire.

Selon l'invention, ledit cycle de lavage comprend une étape de balayage de l'interface entre ledit réacteur de flottation et ledit filtre gravitaire par un fluide dispensé au moyen d'un réseau de rampes d'injection qui s'étend à la surface de ladite interface.

Ainsi, l'invention repose selon cette variante préférentielle sur une approche tout à fait originale qui consiste, dans un procédé combinant une flottation au sein d'un réacteur de flottation et une filtration à grande vitesse dans un filtre gravitaire situé dans le prolongement du réacteur de flottation, à balayer, lors du lavage du filtre, l'interface entre le réacteur de flottation et le filtre gravitaire par un fluide dispensé au moyen d'un réseau de rampes d'injection qui s'étendent à la surface de cette interface.

Le fait de balayer l'interface entre le réacteur de flottation et le filtre gravitaire, en d'autres termes la surface supérieure du filtre gravitaire ou à tout le moins une région proche de celle-ci, au cours du lavage du filtre, permet de réduire le temps de remontée des particules et/ou flocs dégagés du filtre gravitaire jusqu'à la surverse du réacteur de flottation et donc d'accélérer leur évacuation. Le temps de remontée des particules et/ou flocs étant diminué, le phénomène de refloculation est évité ou, à tout le moins, diminué.

Selon une caractéristique avantageuse, ledit fluide est dispensé pendant ladite étape de balayage sensiblement parallèlement à ladite interface.

Ainsi, le fluide de balayage permet non seulement d'augmenter la vitesse de remontée des flocs dans le réacteur de flottation ce qui évite la refloculation mais également de dégager de la surface du filtre gravitaire les flocs qui s'y seraient néanmoins déposés. On améliore ainsi encore davantage l'efficacité de la technique selon l'invention.

Dans un mode de réalisation avantageux, ladite étape de balayage et ladite étape de rétrolavage sont mises en oeuvre simultanément ce qui permet d'accroître encore la vitesse de remontée des flocs et de limiter encore davantage le phénomène de refloculation.

Selon un aspect préférentiel de l'invention, on utilise plus efficacement le volume d'eau de lavage conventionnellement utilisé pour le rétrolavage en le répartissant de façon adéquate entre le bas du filtre pour le rétrolavage et la surface du filtre pour le balayage de surface. En d'autres termes, l'utilisation d'une étape de balayage selon l'invention est préférentiellement effectuée sans que le volume d'eau nécessaire pour le rétrolavage et le balayage soit sensiblement supérieur au volume d'eau qui serait classiquement mise en oeuvre pour un rétrolavage seul, en l'absence de balayage.

Selon une variante, ladite étape de rétrolavage comprend une injection d'eau à contre-courant dans ledit filtre gravitaire à une vitesse préférentiellement comprise entre 8 et 60 m³/m²/h.

On obtient ainsi un dégagement très efficace des flocs piégés dans le filtre gravitaire.

Selon une variante préférentielle, ledit cycle de retrolavage comprend les étapes successives d'injection d'air à contre-courant dans ledit filtre gravitaire, d'injection d'air et d'eau à contre-courant dans ledit filtre gravitaire, d'injection d'eau à contre-courant dans ledit filtre gravitaire, ladite étape de balayage et ladite étape d'injection d'eau étant mise en oeuvre simultanément.

On favorise ainsi l'élimination des flocs piégés dans le filtre gravitaire. L'efficacité du lavage est alors améliorée.

Selon un mode de réalisation préférentiel, ledit cycle de traitement comprend au moins une étape de mini lavage dudit filtre gravitaire.

La mise en oeuvre de mini lavages au cours d'un cycle de traitement permet de réduire l'embolie du filtre gravitaire. La fréquence des cycles de lavage peut ainsi être augmentée ce qui concourt à augmenter la production d'eau traitée d'une part en augmentant la durée des cycles de traitement, et d'autre part en réduisant les pertes en eau dues au lavage du filtre.

Dans ce cas, ladite étape de mini lavage comprend préférentiellement une infiltration d'eau à contre-courant dans ledit filtre gravitaire.

La durée de ladite étape d'infiltration est alors préférentiellement comprise entre 10 et 30 secondes, l'eau étant infiltrée dans ledit filtre gravitaire à une vitesse avantageusement comprise entre 10 et 30 m/h.

On obtient ainsi une réduction efficace de l'embolie du filtre gravitaire.

Cette étape de mini lavage peut être améliorée par l'ajout d'un balayage simultané à l'interface I lors de ce mini lavage qui outre le fait de chasser les bulles d'air, permet de casser les flocs pour éviter un matelassage en surface du filtre dès la reprise de la filtration à la suite du mini-lavage. L'eau de balayage est injectée dans le filtre gravitaire préférentiellement à une vitesse préférentiellement comprise entre 8 et 20 m/h et avantageusement pendant une durée comprise entre 10 et 30 secondes..

Un procédé selon l'invention comprend préférentiellement une étape de mesure d'une information représentative de la perte de charge à travers ledit filtre gravitaire, ladite étape de mini lavage étant déclenchée lorsque la valeur mesurée de ladite information représentative de la perte de charge à travers ledit filtre gravitaire est supérieure ou égale à un premier seuil prédéterminé.

Les mini lavages ne sont alors déclenchés seulement lorsque leur mise en oeuvre est réellement requise. On optimise ainsi le traitement de l'eau.

L'invention concerne également une installation de traitement d'eau telle que défini dans la revendication 11 spécialement adaptée à la mise en oeuvre d'un procédé selon l'une quelconque des variantes mentionnées ci-avant.

Comme indiqué ci-dessus une telle hauteur de média filtrant permet la mise en oeuvre de vitesse de filtration gravitaire élevées comprises entre 10 m/h et 30 m/h.

Le média filtrant pourra être monocouche ou multicouche.

Selon une variante, ledit média filtrant est constitué d'une couche de sable présentant une granulométrie comprise entre 0,5 mm et 0,8 mm répartie sur une hauteur comprise entre 1,5 m et 3,0 m.

Selon une autre variante, ledit média filtrant est constitué de deux couches, à savoir :
une couche inférieure de sable présentant une granulométrie comprise entre 0,5 mm et 0,8 mm répartie sur une hauteur comprise entre 0,75 m et 1,5 m et
une couche supérieure d'un matériau présentant une granulométrie comprise entre 1,2 mm et 2,5 mm choisi dans le groupe constitué par l'anthracite, la pierre ponce, la filtralite® et charbon actif en grain, répartie sur une hauteur comprise entre 0,75 m et 1,5 m.

Selon encore une autre variante, ledit média filtrant est constitué de trois couches, à savoir :
une couche inférieure d'un matériau choisi dans le groupe constitué par le bioxyde de manganèse et le grenat présentant une granulométrie comprise entre 0.2 mm et 2.5 mm, répartie sur une hauteur de 0.3 m à 2 m,
une couche intermédiaire de sable présentant une granulométrie comprise entre 0,5 mm et 0,8 mm, répartie sur une hauteur comprise entre 0.6 m à 3 m, et,
une couche supérieure d'un matériau présentant une granulométrie comprise entre 1,2 mm et 2,5 mm et choisi dans le groupe constitué par l'anthracite, la pierre ponce, la filtralite® et charbon actif en grain, répartie sur une hauteur de 0.6 m à 3 m.

Selon l'invention, l'installation comprend de plus des moyens d'injection d'un fluide de balayage à l'interface entre ledit réacteur de flottation et ledit filtre gravitaire, lesdits moyens d'injection comprenant un réseau de rampes d'injection d'un fluide de balayage qui s'étendent à la surface de ladite interface.

Selon un mode de réalisation particulier, lesdites rampes comprennent des tubes perforés par des orifices.

Cette solution technique permet d'assurer l'étape de balayage de manière simple mais efficace.

Dans ce cas, le diamètre desdits orifices est préférentiellement compris entre 30 et 40 millimètres.

La distance séparant deux orifices successifs ménagés sur un même tube perforé est avantageusement comprise entre 100 et 150 millimètres.

La distance séparant deux tubes perforés successifs est avantageusement comprise entre 1 et 2 mètres.

Lorsque la surface de l'interface sera supérieure à 36 m², les tubes seront préférentiellement espacés entre eux d'environ 2 mètres. Pour les installations de plus petites tailles, ils seront préférentiellement espacés entre eux d'environ 1 à 1,5 mètres.

Les axes desdits orifices s'étendent essentiellement parallèlement à ladite interface.

Le fluide de balayage peut ainsi être dispensé essentiellement parallèlement à la surface de l'interface entre le réacteur de flottation et le filtre gravitaire.

Lesdites rampes s'étendent préférentiellement dans le sens de la largeur de ladite interface. La largeur des flottateurs est en effet le plus souvent inférieure à leur la longueur. Une telle disposition des rampes d'injection d'eau de balayage créera ainsi moins de perte de charges et induira alors une répartition homogène de l'eau dispensée.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une installation de traitement d'eau selon l'art antérieur combinant une flottation et une filtration gravitaire ;
- la figure 2 illustre une installation de traitement d'eau selon l'invention ;
- la figure 3 illustre une vue en perspective des rampes d'injection de fluide de balayage de l'installation de la figure 2.

### 7. Description d'un mode de réalisation de l'invention

### 7.1. Rappel du principe général de l'invention

Le principe général de l'invention repose sur la mise en oeuvre de vitesses élevées de filtration gravitaire, supérieures à 10 m/h, dans une technique de traitement d'eau combinant une flottation et une filtration gravitaire à travers un lit de média filtrant réparti sur une hauteur comprise entre 1,5 m et 3,0 m avec, préférentiellement, lors du lavage du filtre gravitaire, un balayage de l'interface entre le réacteur de flottation et le filtre gravitaire par un fluide dispensé au moyen d'un réseau de rampes d'injection qui s'étendent à la surface de cette interface.

### 7.2. Exemple d'une installation selon l'invention

On présente, en relation avec la figure 2, un mode de réalisation d'une installation de traitement d'eau selon l'invention.

Ainsi que cela est représenté sur cette figure 2, une telle installation comprend une canalisation d'amenée d'eau à traiter 20. Cette canalisation d'amenée 20 débouche dans une zone de coagulation puis dans une zone de floculation 21' comprenant une ou de préférence 2 cuves. La zone de coagulation 21 et la zone de floculation 21' logent des moyens d'agitation qui dans ce mode de réalisation comprennent des agitateurs à pales 22. D'autres moyens d'agitation pourront être mises en oeuvre dans des variantes. La zone de floculation 21' loge ici également un élément de guidage de flux, encore appelé guide flux 23. Dans ce mode de réalisation, ce guide flux 23 comprend un élément tubulaire de section circulaire à l'intérieur duquel l'agitateur à pales 22 est logé.

Des moyens d'injection de coagulant 24 débouchent en amont de la zone de coagulation 21 dans la canalisation d'amenée 20. Dans une variante, ils pourront déboucher directement dans la zone de coagulation 21. Des moyens d'injection de floculant 25 débouchent dans la zone de floculation 21. La zone 21 constitue donc dans ce mode de réalisation une zone de coagulation et la zone 21' de floculation. Dans des variantes, la zone de coagulation et la zone de floculation pourront être dans la même cuve. La zone de floculation 21' peut être sous - divisée en plusieurs zones. La floculation étant optionnelle, l'installation pourra ne comprendre aucune zone de floculation 21' dans des variantes.

La zone de floculation 21' comprend une sortie 26 d'eau coagulée et floculée située en haut de cette zone. En variante, il peut se situer au fond de cette zone 21'. Cette sortie 26 est reliée via une ouverture 28 à l'entrée d'un réacteur de flottation 29, et plus particulièrement de sa zone de mélange 290.

Une canalisation d'acheminement d'eau blanche 30 débouche également à l'entrée du réacteur de flottation 29.

Le réacteur de flottation 29, et plus particulièrement sa zone de séparation 291, comprend classiquement une surverse 31 qui débouche dans une goulotte 32 d'évacuation de boues constituées essentiellement d'un mélange de bulles d'air et de boues. Il comprend également une sousverse qui communique avec l'entrée d'un filtre gravitaire 33.

Le filtre gravitaire 33 s'étend dans le prolongement du réacteur de flottation 29, en dessous de celui-ci, et plus particulièrement de sa zone de séparation depuis laquelle les boues sont évacuées. Le filtre gravitaire 33 comprend une masse filtrante 330.

Cette masse filtrante 330 peut être constituée d'une ou de plusieurs couches de média filtrant. La hauteur de cette masse filtrante 330 est avantageusement comprise entre 1.5 et 3.0 mètres et préférentiellement égale à environ 3 mètres. Elle pourra comprendre :
- une unique couche d'un média filtrant par exemple constitué de sable ou de charbon actif dont la granulométrie pourra être comprise entre 0,5 et 0,8 millimètres : il s'agira d'un filtre monocouche ;
- une couche supérieure par exemple d'anthracite, de pierre ponce, de filtralite, ou de charbon actif en grains dont la granulométrie pourra être comprise entre 1,2 et 2,5 millimètres, et d'une couche inférieure par exemple de sable dont la granulométrie pourra être comprise entre 0,5 et 0,8 millimètres : il s'agira alors d'un filtre bi-couche ;
- une couche supérieure par exemple d'anthracite, de pierre ponce, de filtralite, ou de charbon actif en grains dont la granulométrie pourra être comprise entre 1,2 et 2,5 millimètres, une couche intermédiaire par exemple de sable dont la granulométrie pourra être comprise entre 0,5 et 0,8 millimètres, et une couche inférieure par exemple de bioxyde de manganèse ou de grenat présentant une granulométrie comprise entre 0,2 et 2,5 millimètres : il s'agira d'un filtre tri-couche.

Dans un filtre bi-couche, la hauteur de la couche supérieure pourra être égale à celle de la couche inférieure.

Le filtre gravitaire 33 comprend une sortie qui débouche dans une canalisation d'extraction d'eau traitée 34.

L'installation comprend des moyens d'amenée d'un fluide de balayage 35. Ils comprennent une canalisation d'amenée d'un fluide de balayage 35 débouchant dans un réseau de rampes d'injection qui s'étendent à la surface de l'interface I entre le filtre gravitaire 33 et le réacteur de flottation 29, en particulier de sa zone de séparation 291. L'interface I est la surface supérieure du filtre gravitaire 33, et plus précisément de sa masse filtrante 330.

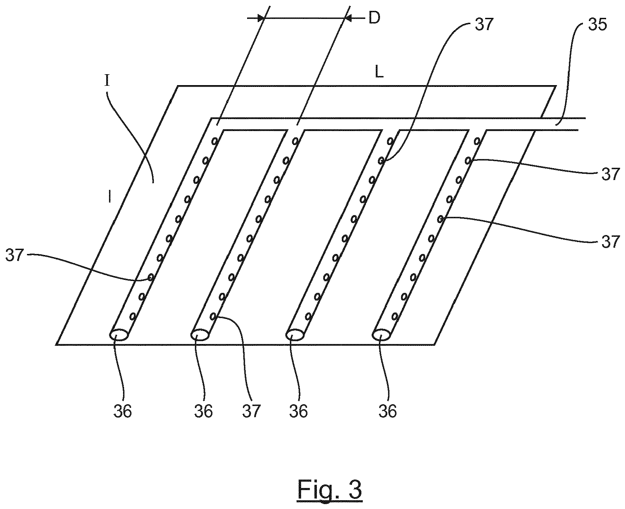

Ainsi que cela est représenté sur la figure 3, qui illustre une vue schématique agrandie de l'interface I entre le filtre gravitaire 33 et le réacteur de flottation 29, les rampes d'injection comprennent une pluralité de tubes 36 qui sont reliés à la canalisation d'amenée d'un fluide de balayage 35. La canalisation 35 est une canalisation principale à laquelle sont reliés les tubes 36 qui sont des canalisations connexes.

Les tubes 36 s'étendent à la surface de l'interface I, essentiellement parallèlement à celle-ci. La distance D qui sépare deux tubes 36 successifs est préférentiellement comprise entre 1 et 2 mètres. Les tubes 36 s'étendent dans le sens de la largeur 1 de l'interface I, la largeur 1 de celle-ci étant inférieure à sa longueur L.

Les tubes 36 sont perforés par des orifices 37 qui sont ménagés le long d'axes essentiellement parallèles à la surface de l'interface I afin d'éviter des infiltrations de sable , de particules ou de flocs . Ils sont préférentiellement posés au dessus de la masse filtrante 330 à une hauteur se situant entre 10 et 30 cm de celle-ci . Le diamètre des orifices 37 est préférentiellement compris entre 30 et 40 millimètres. La distance qui sépare deux orifices 37 successifs ménagés sur un même tube perforé 36 est préférentiellement comprise entre 100 et 150 millimètres. Les orifices 37 sont calibrés pour éviter les pertes de charge. Ils sont préférentiellement ménagés à raison de 8 orifices par mètre linéaire de tube 36. Grâce à de telles caractéristiques on observe une répartition très homogène du débit d'eau sortant des orifices.

La canalisation d'amenée d'un fluide de balayage 35 est dans ce mode de réalisation reliée à la canalisation d'amenée d'eau à traiter 20 au moyen d'une conduite sur laquelle est placée une pompe (non représentées). Dans des variantes, elle pourra être reliée à la canalisation d'extraction d'eau traitée 34 au moyen d'une conduite sur laquelle est placée une pompe ou le cas échéant à la canalisation d'extraction de concentrat provenant d'une unité de dessalement par exemple par osmose inverse placée en aval de la canalisation d'extraction d'eau traitée 34.

L'installation comprend des moyens d'injection d'air, comprenant une canalisation d'injection d'air 39 débouchant à la base du filtre gravitaire 33 et reliée à des moyens de production d'air comme un compresseur.

L'installation comprend des moyens de mesure d'une information représentative de la perte de charge à travers le filtre gravitaire 33. La perte de charge est ainsi mesurée par des instruments adaptés et disposés en amont et en aval du filtre gravitaire.

L'installation comprend des moyens de rétrolavage du filtre gravitaire 33. Ces moyens de rétrolavage comprennent ici une pompe 27 qui permet d'envoyer à contre-courant dans le filtre 33 de l'eau traitée stockée dans une bâche 38 via la canalisation d'extraction 34. Dans des variantes, ils pourront comprendre une canalisation reliée à la canalisation d'amenée 20 d'eau à traiter, débouchant à la base du filtre gravitaire 33 et sur laquelle est montée une pompe pour injecter à contre-courant dans le filtre de l'eau à traiter. Ils pourront encore par exemple comprendre une canalisation reliée à une canalisation d'extraction de concentrat d'une unité de filtration par osmose inverse placée en aval, débouchant à la base du filtre gravitaire 33 et sur laquelle est montée une pompe pour injecter à contre-courant dans le filtre du concentrat de dessalement.

L'installation comprend encore des moyens de pilotage automatique qui permettent de contrôler le déclenchement des cycles de traitement et des cycles de lavage.

### 7.3. Exemple d'un procédé de traitement d'eau selon l'invention

Un procédé de traitement d'eau selon l'invention peut par exemple consister à faire transiter une eau à traiter au sein d'une installation telle que celle qui vient d'être décrite.

Au cours d'un tel procédé, des cycles de traitement et des cycles de lavage du filtre gravitaire sont alternativement mis en oeuvre.

Lors d'un cycle de traitement, l'eau à traiter est acheminée dans la zone de coagulation 21 via la canalisation d'amenée 20 par exemple au moyen d'une pompe d'amenée.

Un ou plusieurs réactifs coagulant sont injectés dans la zone de coagulation 21 et/ou en amont de celle-ci via les moyens d'injection 24. Dans ce mode de réalisation, un ou plusieurs réactifs floculant sont injectés dans la zone de floculation 21'. Les agitateurs 22 sont mis en oeuvre de façon à assurer le mélange des agents coagulant et floculant avec l'eau à traiter. L'eau à traiter subit alors dans ce mode de réalisation une étape de coagulation et de floculation. La floculation est toutefois optionnelle et ne sera mise en oeuvre que si une étape de coagulation la précède. Par contre, une étape de coagulation pourra être effectuée sans qu'une étape de floculation la succède.

Le guide flux 23 permet de générer des flux descendants et ascendants d'eau à l'intérieur de la zone de floculation, comme cela est illustré par les flèches. Sa mise en oeuvre permet donc d'optimiser l'agitation par la conversion du flux radial en flux axial. Elle permet également d'éliminer les zones mortes et les by-pass. Le mélange des agents coagulant et floculant avec l'eau est ainsi amélioré. Le temps de contact entre les agents coagulant et floculant peut donc être réduit, ce qui concourt à réduire le volume et l'emprise au sol de la zone de coagulation 21 et le cas échéant de floculation 21' d'environ 25%. Ce guide flux permet encore de réduire la vitesse d'agitation et de supprimer la poussée radiale ce qui concourt à réduire les sollicitations mécaniques sur les moyens d'agitation. Cette technique est commercialisée par la Demanderesse sous le nom de Turbomix®.

L'eau ainsi coagulée et floculée s'écoule depuis la sortie 26 à la base du réacteur de flottation 29 depuis l'entrée 28 de celui-ci. De l'eau blanche est injectée à l'entrée de ce réacteur de flottation 29 via la canalisation 30. L'oxygène contenu dans cette eau se détend et forme à l'intérieur du réacteur de flottation 29 des bulles d'air. Dans ce mode de réalisation, l'eau préalablement coagulée et/ou floculée et l'eau blanche sont injectée à co-courant dans la zone de mélange 290. L'eau préalablement coagulée et/ou floculée subit alors à l'intérieur du réacteur de flottation 29 une étape de flottation. Au cours de cette étape de flottation, les flocs formés lors de l'étape préalable de coagulation et/ou de floculation sont piégés par les bulles d'air qui remontent à la surface du réacteur de flottation 29. Un mélange de flocs et de bulles d'air est ensuite extrait en surverse 31 du réacteur de flottation 29 et évacué via la goulotte 32 au moyen d'un dispositif de raclage (non représenté) prévu à cet effet.

En parallèle de l'étape de flottation, l'eau débarrassée de la plupart des flocs qui s'y trouvaient initialement en suspension s'écoule gravitairement à une vitesse supérieure à 10 m/h, et préférentiellement de l'ordre de 15 m/h, dans le filtre gravitaire 33 à travers duquel elle subit une étape de filtration gravitaire. Cette vitesse de filtration importante est possible du fait que la hauteur de la masse filtrante 330 est importante. Au cours de cette étape de filtration gravitaire, l'eau à traiter est débarrassée du reste des flocs et autres particules qui s'y trouvaient en suspension. Selon la nature de la masse filtrante 330, une partie de la pollution organique dissoute dans l'eau à traiter peut également en être éliminée par adsorption.

L'eau filtrée est extraite du filtre gravitaire 33 via la canalisation d'extraction 34. Elle peut alors par exemple être acheminée vers une zone de stockage d'eau potable, par exemple la bâche de stockage 38. Dans le cas où l'eau à traiter est de l'eau salée, l'eau extraite du filtre 33 peut servir d'eau d'alimentation d'unité(s) de dessalement par exemple par osmose inverse placées en aval.

Au fur et à mesure que de l'eau est filtrée à travers le filtre gravitaire 33, des bulles d'air viennent progressivement obturer les interstices laissés entre les grains de la masse filtrante 330, ce qui tend à augmenter la perte de charge à travers le filtre gravitaire 33.

Une étape de mesure d'une information représentative de la perte de charge à travers le filtre gravitaire 33, comme par exemple la mesure de la pression en amont et aval du filtre, la différence de pression traduisant ladite perte de charge, est mise en oeuvre préférentiellement de manière continue au cours du cycle de traitement.

Lorsque la valeur mesurée de cette information représentative de la perte de charge à travers le filtre gravitaire 33 devient supérieure ou égale à un premier seuil prédéterminé, une étape de mini lavage est mise en oeuvre.

Cette étape de mini lavage consiste à infiltrer de l'eau filtrée provenant de la sortie du filtre gravitaire 33 via la pompe 27 et la canalisation 34, de l'eau à traiter ou le cas échéant du concentrat d'osmose inverse, à contre courant dans le filtre gravitaire 33 selon une vitesse préférentiellement comprise entre 10 et 30 m/h. La durée des mini lavages est préférentiellement comprise entre 10 et 30 secondes. Des mini lavages pourront ainsi être mis en oeuvre par exemple toutes les 6 heures.

Lors de ces mini lavages, les bulles d'air piégées au sein du filtre gravitaire 33 en sont évacuées. On limite ainsi l'embolie gazeuse du filtre gravitaire. La fréquence des cycles de lavage du filtre peut ainsi être allongée et les pertes en eau réduites. Par conséquent, la durée des cycles de traitement ainsi que la quantité d'eau traitée produite sont augmentées.

Au fur et à mesure que de l'eau est filtrée à travers le filtre gravitaire 33, les interstices entre les grains qui composent sa masse filtrante 330 sont progressivement obturés par la matière qui s'y trouvait initialement en suspension.

Lorsque la valeur mesurée d'une information représentative de la perte de charge à travers le filtre gravitaire 33 devient supérieure ou égale à un deuxième seuil prédéterminé, le cycle de traitement est stoppé et le cycle de lavage du filtre gravitaire 33 est initié.

Le cycle de lavage comprend dans ce mode de réalisation une première sous étape consistant à évacuer l'ensemble des boues, c'est-à-dire du mélange de bulles d'air et de flocs, présentes en surverse 31 du réacteur de flottation 29 via la goulotte 32.

La sous étape suivante consiste à stopper l'arrivée d'eau brute à traiter dans l'installation de traitement.

Au cours de la sous étape suivante, l'eau contenue dans le réacteur de flottation 29 est filtrée à travers le filtre gravitaire 33 jusqu'à ce que le niveau d'eau dans le réacteur de flottation 29 soit nul, c'est-à-dire qu'il se trouve au niveau de l'interface I, autrement dit de la surface supérieure de la masse filtrante 330.

La sous étape suivante consiste à aérer à contre courant le filtre gravitaire pendant une durée comprise entre 1 et 3 minutes selon un débit compris entre 35 Nm³/m²/h et 60 Nm³/m²/h en y introduisant de l'air via la canalisation 39. La masse filtrante est ainsi déstabilisée ce qui a pour effet de débloquer les flocs qui y sont accrochés.

La sous étape suivante consiste à poursuivre l'aération du filtre gravitaire 33 et à y injecter à contre courant de l'eau de lavage via la canalisation 34 selon une vitesse préférentiellement comprise entre 8 et 12 m/h pendant entre 5 et 10 minutes. La masse filtrante 330 est alors mise en suspension et les flocs deviennent libres pour être évacués.

La sous étape suivante consiste à stopper l'aération du filtre gravitaire 33.

Au cours de la sous étape suivante, de l'eau de lavage, encore appelée dans cette étape eau de rinçage, est injectée à contre courant à grande vitesse, préférentiellement comprise entre 15 et 60 m/h, dans le filtre gravitaire 33 via la canalisation 34 pendant entre 5 et 15 minutes. Les flocs contenus dans le filtre gravitaire 33 peuvent ainsi être évacués hors de l'installation en s'écoulant à travers un canal prévu à cet effet en surverse 31 du réacteur de flottation 29.

Simultanément, de l'eau de balayage est dispensée à la surface de l'interface I via les tubes perforés 36 sensiblement parallèlement à celle-ci pendant une durée préférentiellement comprise entre 5 et 15 minutes, l'eau de balayage étant injectée dans le filtre gravitaire à une vitesse préférentiellement comprise entre 8 et 20 m/h.

On crée ainsi un courant de balayage horizontal à la surface de l'interface I. La vitesse de remontée des boues dans le réacteur de flottation 29 est ainsi augmentée ce qui permet d'éviter ou à tout le moins de limiter la refloculation. On notera que ce balayage est effectué sans augmenter sensiblement la quantité d'eau par rapport à la quantité d'eau de rétrolavage que serait nécessaire en son absence.

La fin du cycle de lavage est déterminée sur horloge, ou sur la qualité de l'eau de surverse du flottateur en fin de lavage par une mesure de turbidité, ou encore sur un volume total d'eau comptabilisé pendant le lavage. A la fin du cycle de lavage, un nouveau cycle de traitement est mis en oeuvre. Une pluralité de cycles de traitement et de cycles de lavage est ainsi mise en oeuvre de manière alternée.

## Revendications

1. Procédé de traitement d'eau en vue de sa potabilisation ou de son dessalement, ledit procédé comprenant au moins un cycle de traitement de ladite eau comprenant :
- une étape de coagulation suivie ou non d'une étape de floculation ;
- une étape de flottation au sein d'un réacteur de flottation (29) de l'eau provenant de ladite étape de coagulation suivie ou non d'une étape de floculation ;
- une étape de filtration gravitaire au sein d'un filtre gravitaire (33) de l'eau provenant de ladite étape de flottation, ledit réacteur de flottation (29) étant au moins en partie superposé audit filtre gravitaire (33),
et au moins un cycle de lavage dudit filtre gravitaire comprenant une étape de rétrolavage dudit filtre gravitaire,
**caractérisé en ce que** ladite étape de filtration gravitaire est mise en oeuvre à une vitesse comprise entre 10 m/h et 30 m/h, ledit filtre gravitaire présentant un lit de média filtrant (330) réparti sur une hauteur comprise entre 1,5 m et 3,0 m,
ledit cycle de lavage comprend une étape de balayage de l'interface I entre ledit réacteur de flottation (29) et ledit filtre gravitaire (33) par un fluide dispensé au moyen d'un réseau de rampes d'injection (36) qui s'étendent à la surface de ladite interface I.

2. Procédé selon la revendication 1, **caractérisé en ce que** pendant ladite étape de balayage, ledit fluide est dispensé sensiblement parallèlement à ladite interface **I.**

3. Procédé selon la revendication 1 ou 2, **caractérisé en ce que** ladite étape de balayage et ladite étape de rétrolavage sont mises en oeuvre simultanément.

4. Procédé selon l'une quelconque des revendications 1 à 3, **caractérisé en ce que** ladite étape de rétrolavage comprend une injection d'eau à contre-courant dans ledit filtre gravitaire (33) à une vitesse comprise entre 8 et 60 m³/m²/h.

5. Procédé selon l'une quelconque des revendications 1 à 4, **caractérisé en ce que** ledit cycle de lavage comprend les étapes successives d'injection d'air à contre-courant dans ledit filtre gravitaire (33), d'injection d'air et d'eau à contre-courant dans ledit filtre gravitaire (33), d'injection d'eau à contre-courant dans ledit filtre gravitaire (33), ladite étape de balayage et ladite étape d'injection d'eau étant mise en oeuvre simultanément.

6. Procédé selon l'une quelconque des revendications 1 à 5, **caractérisé en ce que** ledit cycle de traitement comprend au moins une étape de mini lavage dudit filtre gravitaire (33).

7. Procédé selon la revendication 6, **caractérisé en ce que** ladite étape de mini lavage comprend une infiltration d'eau à contre-courant dans ledit filtre gravitaire (33).

8. Procédé selon la revendication 7, **caractérisé en ce que** la durée de ladite étape d'infiltration est comprise entre 10 et 30 secondes, l'eau étant infiltrée dans ledit filtre gravitaire (33) à une vitesse comprise entre 10 et 30 m/h.

9. Procédé selon l'une quelconque des revendications 6 à 8, **caractérisé en ce que** ladite étape de mini lavage comprend une étape de balayage de ladite interface I.

10. Procédé selon l'une quelconque des revendications 6 à 8, **caractérisé en ce qu'**il comprend une étape de mesure d'une information représentative de la perte de charge à travers ledit filtre gravitaire (33), ladite étape de mini lavage étant déclenchée lorsque la valeur mesurée de ladite information représentative de la perte de charge à travers ledit filtre gravitaire (33) est supérieure ou égale à un premier seuil prédéterminé.

11. Installation de traitement d'eau spécialement adaptée à la mise en oeuvre d'un procédé selon l'une quelconque des revendications 1 à 10, **caractérisée en ce qu'**elle comprend :
- des moyens d'amenée d'eau à traiter (20) ;
- une zone de coagulation et éventuellement de floculation (21) dans laquelle débouchent lesdits moyens d'amenée d'eau à traiter (20) ;
- un réacteur de flottation (29) comprenant une entrée reliée à la sortie (26) de ladite zone de coagulation et/ou floculation (21) ;
- un filtre gravitaire (33) ;
ledit réacteur de flottation (29) étant au moins en partie superposé audit filtre gravitaire (33) et communiquant avec lui en sorte que l'eau provenant dudit réacteur de flottation (29) puisse s'écouler gravitairement dans ledit filtre gravitaire (33) ;
**caractérisée en ce que** ledit filtre gravitaire présente un lit de média filtrant réparti sur une hauteur comprise entre 1,5 m et 3,0 m,
ladite installation comprenant des moyens d'injection (35, 36) d'un fluide de balayage à l'interface I entre ledit réacteur de flottation (29) et ledit filtre gravitaire (33), lesdits moyens d'injection comprenant un réseau de rampes d'injection (36) d'un fluide de balayage qui s'étendent à la surface de ladite interface I.

12. Installation selon la revendication 11 **caractérisée en ce que** ledit média filtrant est constitué d'une couche de sable présentant une granulométrie comprise entre 0,5 mm et 0,8 mm répartie sur une hauteur comprise entre 1,5 m et 3,0 m.

13. Installation selon la revendication 11 **caractérisée en ce que** ledit média filtrant est constitué de deux couches, à savoir :
une couche inférieure de sable présentant une granulométrie comprise entre 0,5 mm et 0,8 mm répartie sur une hauteur comprise entre 0,75 m et 1,5 m et
une couche supérieure d'un matériau présentant une granulométrie comprise entre 1,2 mm et 2,5 mm choisi dans le groupe constitué par l'anthracite, la pierre ponce, la filtralite® et charbon actif en grain, répartie sur une hauteur comprise entre 0,75 m et 1,5 m.

14. Installation selon la revendication 11 **caractérisée en ce que** ledit média filtrant est constitué de trois couches, à savoir :
une couche inférieure d'un matériau choisi dans le groupe constitué par le bioxyde de manganèse et le grenat présentant une granulométrie comprise entre 0.2 mm et 2.5 mm, répartie sur une hauteur de 0.3 m à 2 m,
une couche intermédiaire de sable présentant une granulométrie comprise entre 0,5 mm et 0,8 mm, répartie sur une hauteur comprise entre 0.6 m à 3 m, et,
une couche supérieure d'un matériau présentant une granulométrie comprise entre 1,2 mm et 2,5 mm et choisi dans le groupe constitué par l'anthracite, la, la pierre ponce, la filtralite® et charbon actif en grain, répartie sur une hauteur de 0.6 m à 3 m.

15. Installation selon l'une quelconque des revendications 11 à 14, **caractérisée en ce que** lesdites rampes comprennent des tubes perforés (36) par des orifices (37).

16. Installation selon la revendication 15, **caractérisée en ce que** le diamètre desdits orifices (37) est compris entre 30 et 40 millimètres.

17. Installation selon l'une quelconque des revendications 15 ou 16, **caractérisée en ce que** la distance séparant deux orifices (37) successifs ménagés sur un même tube perforé (36) est comprise entre 100 et 150 millimètres.

18. Installation selon l'une quelconque des revendications 15 à 17, **caractérisée en ce que** la distance séparant deux tubes perforés (36) successifs est comprise entre 1 et 2 mètres.

19. Installation selon l'une quelconque des revendications 15 à 18, **caractérisée en ce que** les axes desdits orifices (37) s'étendent essentiellement parallèlement à ladite interface I.

20. Installation selon l'une quelconque des revendications 15 à 19, **caractérisée en ce que** lesdites rampes (36) s'étendent dans le sens de la largeur de ladite interface I.

## Patentansprüche

1. Wasserbehandlungsverfahren zur Trinkwasseraufbereitung oder dessen Entsalzung, wobei das Verfahren mindestens einen Behandlungszyklus des Wassers umfasst, der umfasst:
- einen Koagulationsschritt, gefolgt oder nicht von einem Flockungsschritt;
- einen Flotationsschritt innerhalb eines Flotationsreaktors (29) des aus dem Koagulationsschritt stammenden Wassers gefolgt oder nicht von einem Flockungsschritt;
- einen Schwerkraftfiltrationsschritt innerhalb eines Schwerkraftfilters (33) des aus dem Flotationsschritt stammenden Wassers, wobei der Flotationsreaktor (29) dem Schwerkraftfilter (33) mindestens teilweise überlagert ist,
und mindestens einen Wäscheszyklus des Schwerkraftfilters, einen Rückwäschesschritt des Schwerkraftfilters umfassend,
**dadurch gekennzeichnet, dass** der Schwerkraftfiltrationsschritt bei einer Geschwindigkeit umgesetzt wird, die zwischen 10 m/h und 30 m/h enthalten ist, wobei der Schwerkraftfilter ein Filtermedienbett (330) aufweist, das über eine Höhe verteilt ist, die zwischen 1,5 m und 3,0 m enthalten ist,
der Wäscheszyklus einen Fregensschritt der Schnittstelle I zwischen dem Flotationsreaktor (29) und dem Schwerkraftfilter (33) durch ein Fluid umfasst, das mittels eines Einspritzrampennetzes (36) abgegeben wird, das sich an der Oberfläche der Schnittstelle I erstreckt.

2. Verfahren nach Anspruch 1, **dadurch gekennzeichnet, dass** das Fluid während des Fegensschrittes im Wesentlichen parallel zu der Schnittstelle I verteilen wird.

3. Verfahren nach Anspruch 1 oder 2, **dadurch gekennzeichnet, dass** der Fegensschritt und der Rückwäschesschritt gleichzeitig umgesetzt werden.

4. Verfahren nach einem der Ansprüche 1 bis 3, **dadurch gekennzeichnet, dass** der Rückwäschesschritt eine Gegenstrom-Wassereinspritzung in den Schwerkraftfilter (33) bei einer Geschwindigkeit umfasst, die zwischen 8 und 60 m³/m²/h enthalten ist.

5. Verfahren nach einem der Ansprüche 1 bis 4, **dadurch gekennzeichnet, dass** der Wäscheszyklus die aufeinanderfolgenden Schritte einer Gegenstrom-Lufteinspritzung in den Schwerkraftfilter (33), einer Gegenstrom-Luft- und Wassereinspritzung in den Schwerkraftfilter (33), einer Gegenstrom-Wassereinspritzung in den Schwerkraftfilter (33) umfasst, wobei der Fegensschritt und der Wassereinspritzschritt gleichzeitig umgesetzt werden.

6. Verfahren nach einem der Ansprüche 1 bis 5, **dadurch gekennzeichnet, dass** der Behandlungszyklus mindestens einen Mini-Wäschesschritt des Schwerkraftfilters (33) umfasst.

7. Verfahren nach Anspruch 6, **dadurch gekennzeichnet, dass** der Mini-Wäschesschritt eine Gegenstrom-Wasser-Infiltration in den Schwerkraftfilter (33) umfasst.

8. Verfahren nach Anspruch 7, **dadurch gekennzeichnet, dass** die Dauer des Gegenstrom-Wasser-Infiltration zwischen 10 und 30 Sekunden enthalten ist, wobei das Wasser bei einer Geschwindigkeit in den Schwerkraftfilter (33) infiltriert wird, die zwischen 10 und 30 m/h enthalten ist.

9. Verfahren nach einem der Ansprüche 6 bis 8, **dadurch gekennzeichnet, dass** der Mini-Wäschesschritt einen Fegensschritt der Schnittstelle I umfasst.

10. Verfahren nach einem der Ansprüche 6 bis 8, **dadurch gekennzeichnet, dass** es einen Messschritt einer für den Druckverlust durch den Schwerkraftfilter (33) hindurch repräsentativen Information umfasst, wobei der Mini-Wäschesschritt ausgelöst wird, wenn der Messwert der für den Druckverlust durch den Schwerkraftfilter (33) hindurch repräsentativen Information größer oder gleich einem ersten vorbestimmten Grenzwert ist.

11. Wasserbehandlungsausrüstung, speziell zur Umsetzung eines Verfahrens nach einem der Ansprüche 1 bis 10 ausgeführt, **dadurch gekennzeichnet, dass** sie umfasst:
- Zuführmittel für zu behandelndes Wasser (20);
- eine Koagulations- und eventuell Flockungszone (21), in die die Zuführmittel für zu behandelndes Wasser (20) einmünden;
- einen Flotationsreaktor (29), einen mit dem Ausgang (26) der Koagulations- und/oder Flockungszone (21) verbundenen Eingang umfassend;
- einen Schwerkraftfilter (33);
wobei der Flotationsreaktor (29) dem Schwerkraftfilter (33) mindestens teilweise überlagert ist, und mit diesem kommuniziert, sodass das aus dem Flotationsreaktor (29) stammende Wasser durch die Schwerkraft in den Schwerkraftfilter (33) strömen kann;
**dadurch gekennzeichnet, dass** der Schwerkraftfilter ein Filtermedienbett aufweist, das über eine Höhe verteilt ist, die zwischen 1,5 m und 3,0 m enthalten ist,
wobei die Ausrüstung Einspritzmittel (35, 36) eines Fegensfluids in die Schnittstelle I zwischen dem Flotationsreaktor (29) und dem Schwerkraftfilter (33) umfasst, wobei die Einspritzmittel ein Einspritzrampennetz (36) eines Fegensfluids umfassen, das sich an der Oberfläche der Schnittstelle I erstreckt.

12. Ausrüstung nach Anspruch 11, **dadurch gekennzeichnet, dass** das Filtermedienbett aus einer Sandschicht gebildet ist, die eine Korngrößenverteilung aufweist, die zwischen 0,5 mm und 0,8 mm enthalten ist, über eine Höhe verteilt, die zwischen 1,5 m und 3,0 m enthalten ist.

13. Ausrüstung nach Anspruch 11, **dadurch gekennzeichnet, dass** das Filtermedienbett aus zwei Schichten gebildet wird, nämlich:
einer unteren Sandschicht, die eine Korngrößenverteilung aufweist, die zwischen 0,5 mm und 0,8 mm enthalten ist, über eine Höhe verteilt, die zwischen 0,75 m und 1,5 m enthalten ist, und
einer oberen Schicht aus einem Material, das eine Korngrößenverteilung aufweist, die zwischen 1,2 mm und 2,5 mm enthalten ist, ausgewählt aus der Gruppe, die durch das Anthrazit, den Bimsstein, das Filtralit® und körniger Aktivkohle gebildet wird, über eine Höhe verteilt, die zwischen 0,75 m und 1,5 m enthalten ist.

14. Ausrüstung nach Anspruch 11, **dadurch gekennzeichnet, dass** das Filtermedienbett aus drei Schichten gebildet wird, nämlich:
einer unteren Schicht aus einem Material, ausgewählt aus der Gruppe, die durch das Manganbioxid und den Granat gebildet wird, die eine Korngrößenverteilung aufweisen, die zwischen 0,2 mm und 2,5 mm enthalten ist, über eine Höhe von 0,3 m bis 2 m verteilt,
einer Zwischenschicht aus Sand, die eine Korngrößenverteilung aufweist, die zwischen 0,5 mm und 0,8 mm enthalten ist, über eine Höhe verteilt, die zwischen 0,6 m bis 3 m enthalten ist, und
einer oberen Schicht aus einem Material, das eine Korngrößenverteilung aufweist, die zwischen 1,2 mm und 2,5 mm enthalten ist, und ausgewählt aus der Gruppe, die durch das Anthrazit, das, den Bimsstein, das Filtralit® und körniger Aktivkohle gebildet wird, über eine Höhe von 0,6 m bis 3 m verteilt.

15. Ausrüstung nach einem der Ansprüche 11 bis 14, **dadurch gekennzeichnet, dass** die Rampen gelochte Rohre (36) mit Öffnungen (37) umfassen.

16. Ausrüstung nach Anspruch 15, **dadurch gekennzeichnet, dass** der Durchmesser der Öffnungen (37) zwischen 30 und 40 Millimetern enthalten ist.

17. Ausrüstung nach einem der Ansprüche 15 oder 16, **dadurch gekennzeichnet, dass** der Abstand, der zwei aufeinanderfolgende Öffnungen (37) trennt, die auf einem selben gelochten Rohr (36) vorhanden sind, zwischen 100 und 150 Millimetern enthalten ist.

18. Ausrüstung nach einem der Ansprüche 15 bis 17, **dadurch gekennzeichnet, dass** der Abstand, der zwei aufeinanderfolgende gelochte Rohre (36) trennt, zwischen 1 und 2 Metern enthalten ist.

19. Ausrüstung nach einem der Ansprüche 15 bis 18, **dadurch gekennzeichnet, dass** sich die Achsen der Öffnungen (37) im Wesentlichen parallel zu der Schnittstelle I erstrecken.

20. Ausrüstung nach einem der Ansprüche 15 bis 19, **dadurch gekennzeichnet, dass** sich die Rampen (36) in die Richtung der Breite der Schnittstelle I erstrecken.

## Claims

1. Method for treating water in order to make it drinkable or desalinated, said method comprising at least one cycle for treating said water comprising:
- a step of coagulation, followed or not followed by a step of flocculation;
- a step of flotation, within a flotation reactor (29), of the water coming from said step of coagulation, followed or not followed by a step of flocculation;
- a step of gravity filtration, within a gravity filter (33), of the water coming from said step of flotation, said flotation reactor (29) being at least partly superimposed on said gravity filter (33),
and at least one cycle for washing said gravity filter comprising a step for backwashing said gravity filter,
**characterized in that** said step of gravity filtration is carried out at a speed of 10 m/h to 30 m/h, said gravity filter having a bed of filtering material (330) distributed on a height of 1.5 m to 3.0 m,
said cycle for washing comprises a step for sweeping the interface I between said flotation reactor (29) and said gravity filter (33) with a fluid dispensed by means of a system of injection bars (36) that extend on the surface of said interface I.

2. Method according to claim 1 **characterized in that**, during said step of sweeping, said fluid is dispensed substantially in parallel to said interface I.

3. Method according to claim 1 or 2, **characterized in that** said step of sweeping and said step of backwashing are carried out simultaneously.

4. Method according to any one of the claims 1 to 3, **characterized in that** said step of backwashing comprises a counterflow injection of water into said gravity filter (33) at a speed of 8 to 60 m³/m²/h.

5. Method according to any one of the claims 1 to 4, **characterized in that** said cycle for backwashing comprises the successive steps of counterflow injection of air into said gravity filter (33), counterflow injection of air and water into said gravity filter (33), counterflow injection of water into said gravity filter (33), said step of sweeping and said step for injecting water being implemented simultaneously.

6. Method according to any one of the claims 1 to 5, **characterized in that** said cycle for treating comprises at least one step for mini-washing said gravity filter (33).

7. Method according to claim 6, **characterized in that** said step of mini-washing comprises a counterflow infiltration of water into said gravity filter (33).

8. Method according to claim 7, **characterized in that** the duration of said step of infiltration is from 10 to 30 seconds, the water being infiltrated into said gravity filter (33) at a speed of 10 to 30 m/h.

9. Method according to any one of the claims 6 to 8, **characterized in that** said step of mini-washing comprises a step for sweeping said interface I.

10. Method according to any one of the claims 6 to 8, **characterized in that** it comprises a step for measuring a piece of information representing the head loss through said gravity filter (33), said step of mini-washing being activated when the measured value of said piece of information representing the head loss through said gravity filter (33) is greater than or equal to a first predetermined threshold.

11. Installation for treating water specially adapted to the implementing of a method according to any one of the claims 1 to 10, **characterized in that** it comprises:
- means for intake of water to be treated (20);
- a zone of coagulation and possibly of flocculation (21) into which there lead said means for intake of water to be treated (20);
- a flotation reactor (29) comprising an inlet connected to the outlet (26) of said coagulation and/or flocculation zone (21);
- a gravity filter (33);
said flotation reactor (29) being at least partly superimposed on said gravity filter (33) and communicating with it so that the water coming from said flotation reactor (29) can flow gravitationally into said gravity filter (33);
**characterized in that** said gravity filter has a bed of filtering material distributed on a height of 1.5 m to 3.0 m,
said installation comprising means for injecting (35, 36) a sweeping fluid into the interface I between said flotation reactor (29) and said gravity filter (33), said means for injecting comprising a system of bars for injecting (36) a sweeping fluid that extend on the surface of said interface I.

12. Installation according to claim 11 **characterized in that** said filtering material is constituted by a layer of sand having a grain size of 0.5 mm to 0.8 mm distributed on a height of 1.5 m to 3.0 m.

13. Installation according to claim 11 **characterized in that** said filtering material is constituted by two layers, namely:
- a lower layer of sand having a grain size of 0.5 mm to 0.8 mm distributed on a height of 0.75 m to 1.5 m and
- an upper layer of a material having a grain size of 1.2 mm to 2.5 mm chosen from the group constituted by anthracite, pumice stone, filtralite® and granular activated carbon, distributed on a height of 0.75 m to 1,5 m.

14. Installation according to claim 11 **characterized in that** said filtering material is constituted by three layers, namely:
a lower layer of a material chosen from the group constituted by manganese dioxide and garnet having a grain size of 0.2 mm to 2.5 mm, distributed on a height of 0.3 m to 2 m,
an intermediate layer of sand having a grain size of 0.5 mm to 0.8 mm, distributed on a height of 0.6 m to 3 m, and,
an upper layer of a material having a grain size of 1.2 mm to 2.5 mm chosen from the group constituted by anthracite, pumice stone, filtralite® and granular activated carbon, distributed on a height of 0.6 m to 3 m.

15. Installation according to any one of the claims 11 to 14, **characterized in that** said bars comprise tubes (36) perforated by orifices (37).

16. Installation according to claim 15, **characterized in that** the diameter of said orifices (37) is from 30 to 40 millimeters.

17. Installation according to any one of the claims 15 or 16, **characterized in that** the distance between two successive orifices (37) made in a same perforated tube (36) is from 100 to 150 millimeters.

18. Installation according to any one of the claims 15 to 17, **characterized in that** the distance between two successive perforated tubes (36) is from 1 to 2 meters.

19. Installation according to any one of the claims 15 to 18, **characterized in that** the axes of said orifices (37) extend essentially in parallel to said interface I.

20. Installation according to any one of the claims 15 to 19, **characterized in that** said bars (36) extend in the sense of the width of said interface I.
